# EUROPEAN PATENT SPECIFICATION

(11) **EP 2 858 145 B1**
(45) Date of publication and mention of the grant of the patent: **08.03.2017**
(21) Application number: 13794281.9
(22) Date of filing: 22.05.2013
(51) Int. Cl.: H01M 4/13, H01M 10/052, H01M 2/14, H01M 2/16, H01M 4/04, H01M 10/058, H01M 2/18

(54) **POSITIVE ELECTRODE FOR NONAQUEOUS ELECTROLYTE BATTERY, AND NONAQUEOUS ELECTROLYTE SECONDARY BATTERY**
POSITIVELEKTRODE FÜR BATTERIE MIT WASSERFREIEM ELEKTROLYT UND SEKUNDÄRBATTERIE MIT WASSERFREIEM ELEKTROLYT
ÉLECTRODE POSITIVE POUR BATTERIE À ÉLECTROLYTE NON AQUEUX, ET BATTERIE SECONDAIRE À ÉLECTROLYTE NON AQUEUX

(30) Priority: 25.05.2012 JP 2012120055
(43) Date of publication of application: 08.04.2015
(73) Proprietor: NEC Energy Devices, Ltd., Chuo-ku Sagamihara-shi Kanagawa 252-5298 (JP)
(72) Inventor: OHTA, Tomoyuki, Sagamihara-shi Kanagawa 2525298 (JP); UKITA, Akio, Sagamihara-shi Kanagawa 2525298 (JP); ANAN, Takayoshi, Sagamihara-shi Kanagawa 2525298 (JP)
(74) Representative: Vossius & Partner Patentanwälte Rechtsanwälte mbB
(86) International application number: PCT/JP2013/064159
(87) International publication number: WO 2013/176161

(56) References cited:
- WO-A1-2013/047402
- JP-A- H09 167 617
- JP-A- 2005 285 638
- JP-A- 2007 095 467
- JP-A- 2010 049 909
- JP-A- 2010 055 906
- US-A1- 2006 127 774
- US-A1- 2007 154 788
- US-A1- 2009 130 548

## Description

### Technical Field

The present invention relates to a positive electrode for a non-aqueous electrolyte battery such as a lithium-ion secondary battery and a non-aqueous electrolyte secondary battery using the positive electrode.

### Background Art

In a non-aqueous electrolyte secondary battery such as a lithium ion secondary battery, positive and negative electrodes are laminated through separators. Thus, in order to prevent short circuit due to contact between positive and negative electrodes at an end portion of one electrode, an insulating layer is formed at the end portion of the one electrode. However, the number of mass transfer paths between the positive and negative electrodes is reduced upon charging and discharging by the insulating layer formed for the purpose of preventing the short circuit, resulting in a decrease in charge and discharge capacity.

Under such a circumstance, there have been made some proposals to realize the prevention of the short circuit without involving the decrease in charge and discharge capacity.

For example, there is proposed a configuration in which an insulating layer having a through hole, i.e., an insulating tape or an insulating coating is formed at a portion on a protrusion formed at each of both length direction end portions of an electrode formed on a band-shaped collector for use in a winding type battery. This has been proposed to realize mass transfer through the through hole so as to prevent a decrease in charge and discharge capacity (refer to, e.g., JP 2006-40878A (Patent Document 1).

US 2007/154788 A1 relates to a lithium secondary battery constructed with an electrode assembly, a case for receiving the electrode assembly and an electrolyte solution.

### Disclosure of the Invention

### Problems to be Solved by the Invention

When the insulating tape having a through hole is attached to the portion on the protrusion of an electrode active material layer as described in Patent Document 1 in order to realize the internal short circuit without involving the decrease in charging and discharging capacity, the insulating tape has a configuration in which all portions thereof are integrally formed excluding the through hole. The insulating tape or insulating layer having such a through hole has the following problem when used for the purpose of effective use of the electrode active material layer upon charging and discharging of the battery.

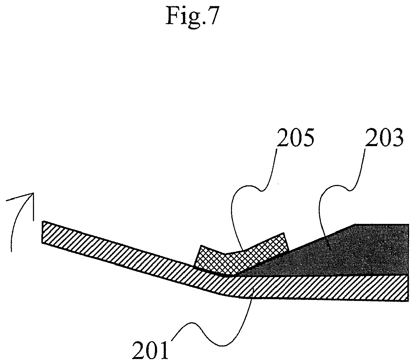

FIG. 7 is a view explaining a lithium ion secondary battery in which the insulating layer is formed so as to reduce a possibility of occurrence of battery internal short circuit and in which a decrease in charge and discharge capacity due to formation of the insulating layer is suppressed and is a cross-sectional view illustrating a battery electrode in which the electrode active material layer is formed on the collector. A member formed by attaching a tape 205 having a through hole for the purpose of preventing the battery short circuit in a range from an electrode active material layer 203 to a collector 201 beyond a coating end of the electrode active material layer 203 is formed as one layer body, and it is thus significantly affected by a difference in thermal expansion coefficient between the insulating layer and battery electrode as a base member, resulting in deformation of the battery electrode as illustrated in the figure.

### Means for Solving the Problems

According to an aspect of the present invention, there is provided a positive electrode for non-aqueous electrolyte battery including: a positive electrode collector; a coated film of a positive electrode active material formed on the collector; an non-uniform area formed along an end portion of the coated film, in which a thickness of the positive active material changes; and protruding insulators erected on the non-uniform area and a part of a surface of the collector adjacent to the non-uniform area, wherein the protruding insulators erected on a surface of the non-uniform area are mutually independent and disposed at an arrangement density low enough to allow transfer of a battery reactive material through the surface of the non-uniform area, and the protruding insulators erected on a part of the surface of the collector are disposed at an arrangement density higher than that of the protruding insulators erected on a surface of the non-uniform area.

The protruding insulators are formed on the surface of the non-uniform area adjacent to a surface of a positive electrode lead tab.

The protruding insulators are formed in a dotted pattern or a band-like pattern.

The protruding insulators are formed by coating a curable composition using an inkjet coater.

According to another aspect of the present invention, there is provided a non-aqueous electrolyte secondary battery having a configuration in which the positive electrode having any of the above features and a negative electrode having an area larger than that of the positive electrode are disposed opposite to each other through a separator.

The non-aqueous electrolyte secondary battery is a lithium ion battery.

### Advantages of the Invention

In the positive electrode for non-aqueous electrolyte battery according to the present invention, the protruding insulators are disposed as the insulating member on a part of the positive electrode lead tab with the arrangement density thereof changed, so that it is possible to prevent deformation of the insulating member due to a temperature change, prevent short circuit with the negative electrode, and further to realize mass transfer between the positive and negative electrodes through the protruding insulators, whereby a battery having high safety and high utilization efficiency of the active material can be provided.

### Brief Description of the Drawings

FIGS. 1A to 1C are views each explaining an example of a positive electrode for non-aqueous electrolyte battery according to the present invention.
FIGS. 2A and 2B are views each explaining another embodiment of the positive electrode according to the present invention.
FIG. 3 is a view explaining examples of a protruding insulator that can be used in the present invention.
FIGS. 4A and 4B are views each explaining a producing method of the positive electrode according to the present invention.
FIGS. 5A and 5B are views each explaining a cut-out process of the positive electrode according to the present invention.
FIGS. 6A to 6D are views each explaining a non-aqueous electrolyte secondary battery using the positive electrode according to the present invention.
FIG. 7 is a view explaining a conventional lithium ion secondary battery in which a possibility of occurrence of battery internal short circuit is reduced and in which a decrease in charge and discharge capacity is suppressed.

### Best Mode for Carrying Out the Invention

Hereinafter, the present invention will be described with reference to the drawings.

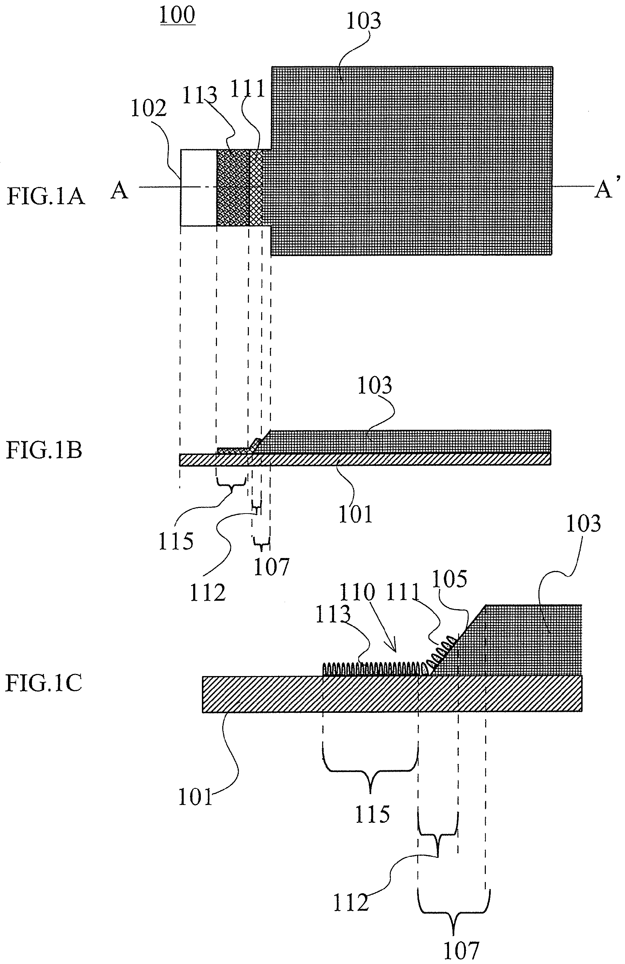

FIGS. 1A to 1C are views each explaining an example of a positive electrode for non-aqueous electrolyte battery according to the present invention. FIG. 1A is a plan view, and FIG. 1B is a cross-sectional view taken along a line A-A' of FIG. 1A. FIG. 1C is a cross-sectional view illustrating, in an enlarged manner, a part of a positive electrode active material layer of a positive electrode terminal of FIG. 1B.

In the present invention, descriptions will be given by taking a lithium ion secondary battery as an example. Further, in the present invention, an active material layer is provided on only one side of a collector to avoid complication of the figure; however, the present invention is not limited to a battery electrode in which the active material layer is formed on only one side of the collector, but the active material layers having the same configuration may be formed on both sides of the collector.

A positive electrode 100 of the present invention has a positive electrode active material layer 103 on a surface of a positive electrode collector 101. The positive electrode active material layer 103 is formed by coating, on the surface of the positive electrode collector 101, a slurry prepared by compounding lithium-transition metal compound oxide such as lithium-manganese composite oxide or lithium-cobalt composite oxide, a conductivity imparting agent, such as carbon black, a binder, and the like and then drying the slurry. A positive electrode lead tab 102 is formed integrally with the positive electrode collector 101.

The positive electrode active material layer 103 can be formed by coating the above slurry on the surface of the positive electrode collector 101 using a die coater. At this time, an incline 105 is generated at an end portion of the coating area as illustrated in FIG. 1B. An area around the incline 105 is hereinafter referred to also as "non-uniform area 107".

An insulating member 110 is disposed so as to extend, in a direction in which a thickness of the positive electrode active material layer becomes smaller, from a part of a surface of the non-uniform area 107 up to the positive electrode lead tab 102.

The insulating member 110 includes a low-density area 112 and a high-density area 115. The low-density area 112 is an area where low-density protruding insulators 111 arranged, at intervals from each other, on a surface of the non-uniform area 107. The high-density area 115 is an area where high-density protruding insulators 113 are arranged, at intervals smaller than those of the low-density protruding insulators 111, on the collector.

As described above, forming the low-density area 112 where an arrangement density of the protruding insulators is low from at least a part of the surface of the non-uniform area 107 to a surface of the collector 101 allows sufficient utilization of battery reaction at the non-uniform area. Further, forming the high-density area 115 where the protruding insulators are arranged at a high density on the collector surface that does not contribute to the battery reaction allows reliable prevention of the internal short circuit.

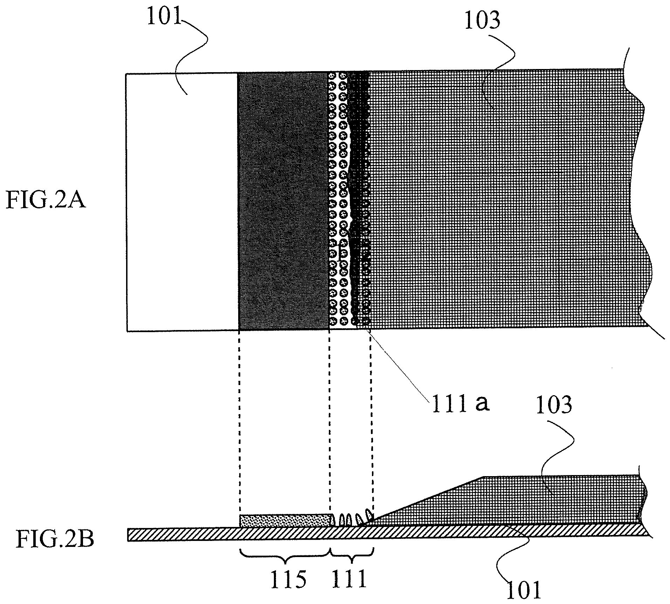

FIGS. 2A and 2B are views each explaining another embodiment of the positive electrode according to the present invention.

FIG. 2A is a plan view as viewed from above the positive electrode surface, and FIG. 2B is a side view of FIG. 2A.

When the positive electrode active material layer 103 is formed on the positive electrode collector 101 by means of a coater, a slight displacement 111a inevitably occurs at the end portion of the coating area of the positive electrode active material layer 103.

Thus, by determining a width for forming the low-density area 112 in consideration of the displacement 111a, it is possible to form the low-density area 112 having a practical size.

Further, it is not always necessary to provide a clear boundary between the low-density area 112 and high-density area 115, and a configuration may be adopted, in which the arrangement density gradually increases from the low-density area 112 toward the high-density area 115.

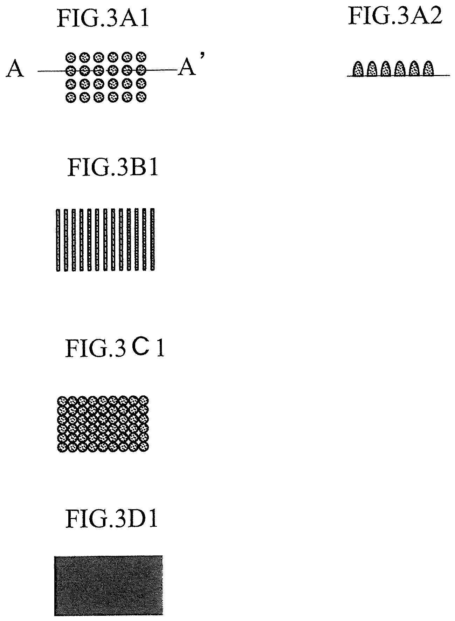

FIG. 3 (A1, A2, B1, C1, and D1) is a view explaining examples of the protruding insulator that can be used in the present invention. A1, A2, B1, C1, and D1 are all plan views as viewed from above.

A1, in which the arrangement density of the protruding insulators is low, illustrates the low-density protruding insulators, and A2 is a cross-sectional view of A1 taken along a line A-A' which illustrates an example of round head-shaped insulators.

B1 is a view illustrating an example of the low-density protruding insulators which are linear shaped protrusion insulators arranged in parallel to each other.

C1 is a view illustrating the high-density protruding insulators which are round head-shaped insulators similar to those of A1 arranged at high density.

D1 illustrates the high-density protruding insulators, i.e., a large number of protruding insulators arranged at a high density. A suitable one can be selected from among the above examples depending on a size and the like of a battery to be produced.

The low-density protruding insulators arranged in the low-density area in the present invention each have a height of 5 µm to 100 µm, preferably 5 µm to 60 µm, more preferably 5 µm to 40 µm. A diameter of each protruding insulators is 50 µm to 600 µm, preferably 50 µm to 500 µm. Further, when the protruding insulators are projected to a rectangular area contacting end points of the protruding insulators, a ratio of the projected area relative to the rectangular area is 20% to 70%, preferably 30% to 60%.

The high-density protruding insulators arranged in the high-density area in the present invention each have a height of 5 µm to 100 µm, preferably 5 µm to 60 µm, more preferably 5 µm to 40 µm. A diameter of each protruding insulators is 50 µm to 600 µm, preferably 50 µm to 500 µm. Further, when the protruding insulators are projected to a rectangular area contacting end points of the protruding insulators, a ratio of the projected area relative to the rectangular area is 75% to 100%, preferably 80% to 100%.

Each protruding insulator is not limited to the round head shaped protruding insulator but may be formed into various shapes such as a conical shape and a columnar shape. Further, each protruding insulator preferably has a curved shape, such as a circular or ellipsoidal shape, in cross section perpendicular to a height direction. Further, each protruding insulator preferably has a rectangular shape or a shape surrounded by a left-right symmetric curve such as a parabola in cross section taken along a line parallel to the height direction and passing a center of the protruding insulator.

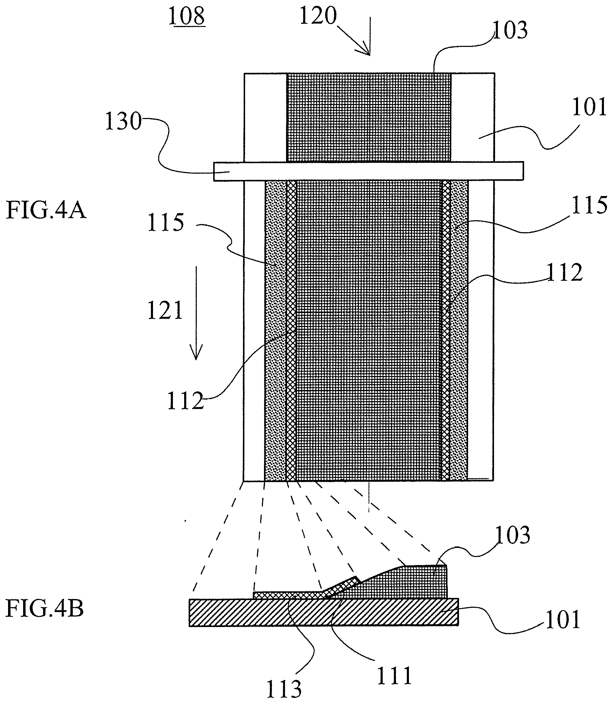

FIGS. 4A and 4B are views each explaining a producing method of the positive electrode according to the present invention. FIG. 4A is a plan view of the positive electrode surface of a positive electrode web from above, and FIG. 4B is a view illustrating a part of a side surface of FIG. 4 in an enlarged manner.

FIG. 4A illustrates a positive electrode web 108. The positive electrode web 108 includes the positive electrode active material layer 103 which is formed by coating, on the surface of the band-shaped collector 101, a positive electrode active material slurry prepared in a predetermined blending ratio symmetrically with respect to a center line 120 in a longitudinal direction and then drying the slurry.

A curable composition is coated using an inkjet coater while moving the positive electrode web 108 in a travel direction 121, followed by curing, whereby the positive electrode web 108 can be produced. As the curable composition, a thermosetting composition, an ultraviolet curing composition, or the like can be used.

Further, the mutually independent protruding insulators are used in the low-density area, so that a positive electrode web less subject to deformation due to heat and capable of demonstrating excellent characteristics even when the thermosetting composition is used.

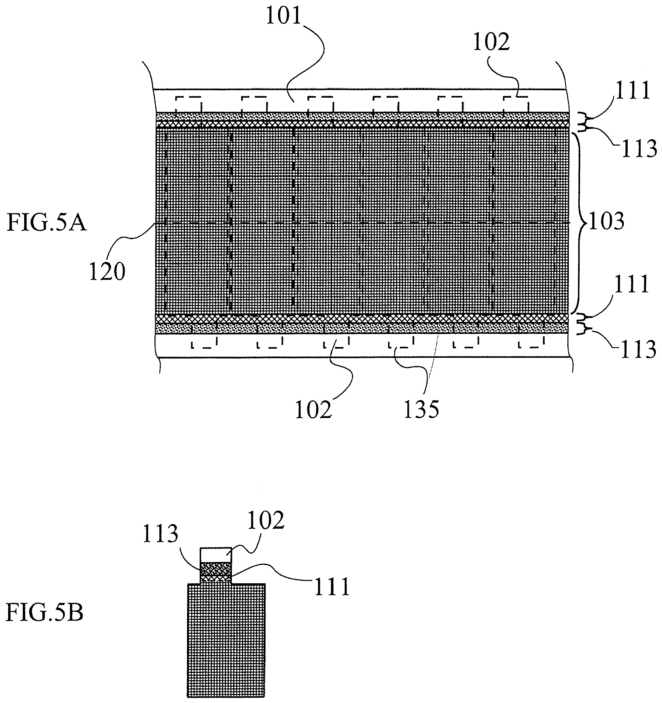

FIGS. 5A and 5B are views each explaining a cut-out process of the positive electrode according to the present invention. As illustrated in FIG. 5A, after the positive electrode active material layer 103 is coated symmetrically with respect to the longitudinal direction center line 120 of the collector 101, the low-density protruding insulator 111 and high-density protruding insulator 113 each having a predetermined width are each formed in symmetrical positions with respect to the center line 120 so as to extend in the longitudinal direction.

Then, punching is performed along a cut line 135 around each unit electrode and the center line 120, whereby the positive electrode illustrated in FIG. 5B can effectively be produced.

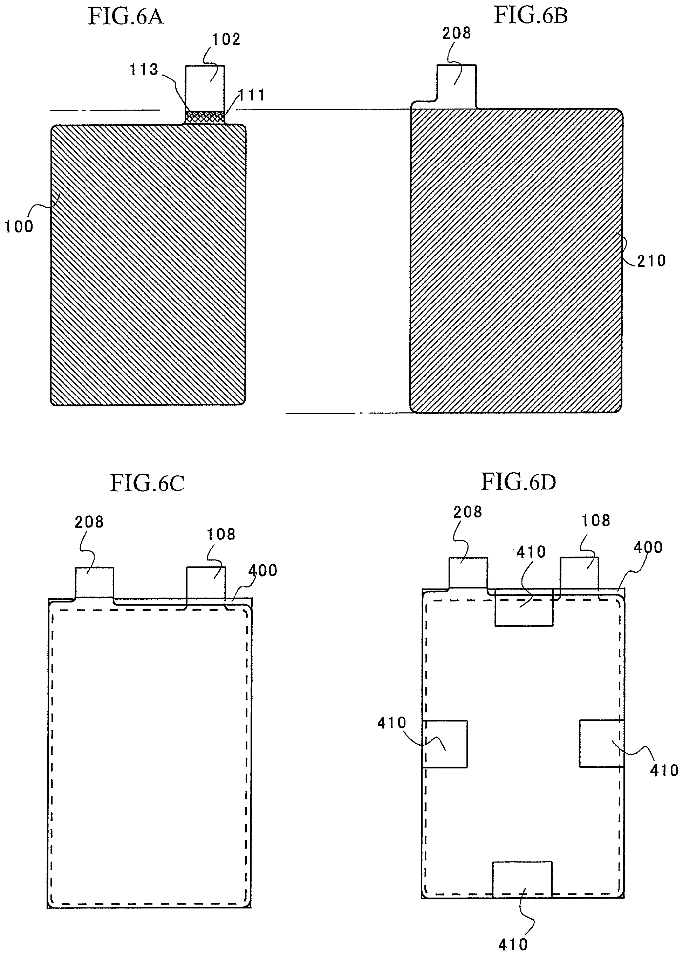

FIGS. 6A to 6D are views each explaining a non-aqueous electrolyte secondary battery using the positive electrode according to the present invention.

As illustrated in FIG. 6A, in the positive electrode 100 according to the present invention, the low-density protruding insulators 111 and high-density protruding insulators 113 are formed at an outer edge portion of the positive electrode active material layer at which the positive electrode lead tab 102 extends from the positive electrode active material layer.

On the other hand, as illustrated in FIG. 6B, a negative electrode 210 has an area larger than that of the positive electrode, so that, as illustrated in FIG. 6C, the positive electrode 100 is enveloped in a bag-shaped separator 400 having the same outer shape as that of the negative electrode 210. Then, the positive and negative electrodes are alternately laminated as illustrated in FIG. 6D and fixed to each other by fixing tapes 410, whereby a laminate of a battery element is completed.

The outer edge portion of the positive electrode active material layer on the positive electrode lead tab 102 of the positive electrode 100 is covered by the low-density protruding insulators 111 and high-density protruding insulators 113, so that even if the separator contracts, it is possible to prevent short circuit between the positive electrode lead tab 102 of the positive electrode 100 and the negative electrode 200 having an area larger than that of the positive electrode 100.

### Industrial Applicability

In the positive electrode for non-aqueous electrolyte battery according to the present invention, the insulating member including the plurality of protruding insulators is disposed on a part of the positive electrode lead tab as an insulating protective film, so that it is possible to prevent short circuit with the negative electrode, as well as to realize mass transfer between the positive and negative electrodes through the protruding insulators, whereby a battery having high safety and high utilization efficiency of the active material can be provided.

### Reference Signs List

- 100:: Positive electrode
- 101:: Positive electrode collector
- 102:: Positive electrode lead tab
- 103:: Positive electrode active material layer
- 105:: Incline
- 107:: Non-uniform area
- 108:: Positive electrode web
- 110:: Insulating member
- 111:: Low-density protruding insulator
- 111a:: Displacement
- 112:: Low-density area
- 113:: High-density protruding insulator
- 115:: High-density area
- 120:: Longitudinal direction center line
- 121:: Travel direction
- 130:: Inkjet coater
- 135:: Cut line
- 210:: Negative electrode
- 400:: Bag-shaped separator
- 410:: Fixing tape

## Claims

1. Apositive electrode (100) for non-aqueous electrolyte battery, comprising:
a positive electrode collector (101);
a coated film of a positive electrode active material formed on the collector (101);
an non-uniform area (107) formed along an end portion of the coated film, in which a thickness of the positive active material changes;
**characterized in that**
the positive electrode further comprises:
protruding insulators (111; 113) erected on the non-uniform area (107) and a part of a surface of the collector (101) adjacent to the non-uniform area (107), wherein
the protruding insulators (111) erected on a surface of the non-uniform area (107) are mutually independent, and
the protruding insulators (113) erected on a part of the surface of the collector (101) are disposed at an arrangement density higher than that of the protruding insulators (111) erected on a surface of the non-uniform area (107).

2. The positive electrode (100) for non-aqueous electrolyte battery according to claim 1, **characterized in that**
the protruding insulators (111; 113) are formed on the surface of the non-uniform area (107) adjacent to a surface of a positive electrode lead tab (102).

3. The positive electrode (100) for non-aqueous electrolyte battery according to claim 1 or 2, **characterized in that**
the protruding insulators (111; 113) are formed in a dotted pattern or a band-like pattern.

4. A non-aqueous electrolyte secondary battery having a configuration in which the positive electrode (100) as claimed in any of claims 1 to 3 and a negative electrode (210) having an area larger than that of the positive electrode (100) are disposed opposite to each other through a separator (400).

5. The non-aqueous electrolyte secondary battery according to claim 4 being a lithium ion battery.

6. A process of producing a positive electrode (100) for non-aqueous electrolyte battery according to any one of claims 1 to 5, **characterized in that**
the protruding insulators (111; 113) are formed by coating a curable composition using an inkjet coater (130).

## Patentansprüche

1. Positivelektrode (100) für eine Batterie mit nicht wässrigem Elektrolyt, die aufweist:
einen Positivelektrodenkollektor (101);
einen aufgetragenen Film aus einem Positivelektroden-Aktivmaterial, das auf dem Kollektor (101) gebildet ist;
eine entlang eines Endabschnitts des aufgetragenen Films gebildete ungleichförmige Fläche (107), in der sich eine Dicke des Positivaktivmaterials ändert;
**dadurch gekennzeichnet, dass**
die Positivelektrode ferner aufweist:
vorstehende Isolatoren (111; 113), die auf der ungleichförmigen Fläche (107) und einem Teil einer Oberfläche des Kollektors (101) benachbart zur ungleichförmigen Fläche (107) aufgestellt sind, wobei
die auf einer Oberfläche der ungleichförmigen Fläche (107) aufgestellten vorstehenden Isolatoren (111) voneinander unabhängig sind und
die auf einem Teil einer Oberfläche des Kollektors (101) aufgestellten vorstehenden Isolatoren (113) mit einer Anordnungsdichte angeordnet sind, die höher als die der auf einer Oberfläche der ungleichförmigen Fläche (107) aufgestellten vorstehenden Isolatoren (111) ist.

2. Positivelektrode (100) für eine Batterie mit nicht wässrigem Elektrolyt nach Anspruch 1, **dadurch gekennzeichnet, dass**
die vorstehenden Isolatoren (111; 113) auf der Oberfläche der ungleichförmigen Fläche (107) benachbart zu einer Oberfläche eines Positivelektroden-Anschlussstreifens (102) gebildet sind.

3. Positivelektrode (100) für eine Batterie mit nicht wässrigem Elektrolyt nach Anspruch 1 oder 2, **dadurch gekennzeichnet, dass**
die vorstehenden Isolatoren (111; 113) in einem Punktmuster oder einem bandartigen Muster gebildet sind.

4. Sekundärbatterie mit nicht wässrigem Elektrolyt, die eine Konfiguration hat, in der die Positivelektrode (100) nach einem der Ansprüche 1 bis 3 und eine Negativelektrode (210) mit einer größeren Fläche als die der Positivelektrode (100) über einen Separator (400) entgegengesetzt zueinander angeordnet sind.

5. Sekundärbatterie mit nicht wässrigem Elektrolyt nach Anspruch 4, die eine Lithiumionenbatterie ist.

6. Verfahren zur Herstellung einer Positivelektrode (100) für eine Batterie mit nicht wässrigem Elektrolyt nach einem der Ansprüche 1 bis 5, **dadurch gekennzeichnet, dass**
die vorstehenden Isolatoren (111; 113) durch Auftragen einer härtbaren Zusammensetzung mit Hilfe eines Tintenstrahlbeschichters (130) gebildet werden.

## Revendications

1. Electrode positive (100) pour batterie à électrolyte non aqueux, comprenant :
un collecteur d'électrode positive (101) ;
un film déposé d'un matériau actif d'électrode positive formé sur le collecteur (101) ;
une zone non uniforme (107) formée le long d'une partie d'extrémité du film déposé, où une épaisseur du matériau actif positif change ;
**caractérisée en ce que**
l'électrode positive comprend en outre :
des isolateurs saillants (111 ; 113) dressés sur la zone non uniforme (107) et sur une partie d'une surface du collecteur (101) adjacente à la zone non uniforme (107), dans laquelle
les isolateurs saillants (111) dressés sur une surface de la zone non uniforme (107) sont mutuellement indépendants, et
les isolateurs saillants (113) dressés sur une partie de la surface du collecteur (101) sont disposés avec une densité d'agencement supérieure à celle des isolateurs saillants (111) dressés sur une surface de la zone non uniforme (107).

2. Electrode positive (100) pour batterie à électrolyte non aqueux selon la revendication 1, **caractérisée en ce que**
les isolateurs saillants (111 ; 113) sont formés sur la surface de la zone non uniforme (107) adjacente à une surface d'une languette conductrice d'électrode positive (102).

3. Electrode positive (100) pour batterie à électrolyte non aqueux selon la revendication 1 ou 2, **caractérisée en ce que**
les isolateurs saillants (111 ; 113) sont formés en un motif de points ou en un motif similaire à une bande.

4. Batterie secondaire à électrolyte non aqueux présentant une configuration dans laquelle l'électrode positive (100) selon l'une quelconque des revendications 1 à 3 et une électrode négative (210) ayant une aire supérieure à celle de l'électrode positive (100) sont disposées l'une en face de l'autre par l'intermédiaire d'un séparateur (400).

5. Batterie secondaire à électrolyte non aqueux selon la revendication 4 qui est une batterie au lithium-ion.

6. Processus de production d'une électrode positive (100) pour batterie à électrolyte non aqueux selon l'une quelconque des revendications 1 à 5, **caractérisé en ce que**
les isolateurs saillants (111 ; 113) sont formés en déposant une composition durcissable en utilisant un dispositif d'enduction à jet d'encre (130).
